# EUROPÄISCHE PATENTANMELDUNG

(11) **EP 2 375 284 A1**
(43) Veröffentlichungstag der Anmeldung: **12.10.2011**
(21) Anmeldenummer: 11161414.5
(22) Anmeldetag: 07.04.2011
(51) Int. Cl.: G03B 35/08, H04N 13/00

(54) **Halterungsvorrichtung für stereoskopische Aufnahmerigs**

(30) Priorität: 09.04.2010 DE 202010004747 U
(71) Anmelder: SCREEN PLANE GmbH, 81549 München (DE)
(72) Erfinder: Cramer, Sebastian, 81549 München (DE); Bernotat, Jan, 83346 Bergen (DE)
(74) Vertreter: Hano, Christian

(57) **Zusammenfassung**

Die Halterungsvorrichtung für ein stereoskopisches Aufnahmerig, welches zwei Kameras (3a, 3b) mit jeweils einem Objektiv (4a, 4B) umfasst, weist ein an einer Lagerungsvorrichtung (11a) um eine horizontale Schwenkachse (11) verschwenkbares Halterungselement (2) auf. Außerdem ist ein im radialen Abstand zu der Schwenkachse (11) an dem Halterungselement (2) angebrachter Strahlenteiler (7, 8) mit einem teildurchlässigen Spiegel (8) vorgesehen, dessen Spiegelebene parallel zur Schwenkachse (11) verläuft. Beidseitig des Strahlenteilers (7, 8) sind im Winkelabstand um die Schwenkachse an dem Halterungselement (2) zwei Befestigungseinrichtungen (5a, 5b) angebracht, an denen jeweils eine Kamera (3a, 3b) so angebracht werden kann, dass sich die Projektionen der optischen Achsen (6a, 6b) der Objektive der Kameras (3a, 3b) aus einer horizontalen Richtung auf einer gedachten vertikalen Ebene schneiden, die von der Schwenkachse (11) senkrecht geschnitten wird, und die optischen Achsen (6a, 6b) auf die Spiegelebene treffen. Die Schwenkachse (11) schneidet die gedachte vertikale Ebene in einem Bereich, der von den horizontalen Projektionen der Befestigungseinrichtungen und dem Strahlenteiler (7, 8) auf die vertikale Ebene begrenzt wird, An der Lagerungsvorrichtung (11a) ist im Abstand zur horizontalen Schwenkachse (11) eine Montageeinrichtung (10) zur Befestigung an einem Schwenk- / Neigesystem vorgesehen.

## Beschreibung

### Anwendungsgebiet und Stand der Technik

Die Erfindung betrifft eine Halterungsvorrichtung für stereoskopische Aufnahmerigs, mit der ein Neigewinkel einer Kamerahalterung beider Aufnahmekameras voreingestellt werden kann.

Herkömmliche Spiegelrigs für stereoskopische Aufnahmen weisen meist zwei im Winkel von 90° angeordnete Aufnahmekameras und einen Spiegelkasten mit einem im Winkel von 45° angeordneten Strahlenteilerspiegel auf, welcher den Strahlengang der vertikal ausgerichteten Kamera umlenkt. Eine derartige Anordnung ist beispielsweise in Fig. 1 der Veröffentlichung US 2007/0140682 A1 vorgestellt.

Hierbei sind eine oder beide Aufnahmekameras horizontal seitlich verfahrbar, so dass sich der interaxiale Abstand einstellen lässt und auch bis auf 0 reduziert werden kann. Der Vorteil derartiger Spiegelrigs, gegenüber einer Side-by-side-Anordnung liegt darin, dass der Abstand der beiden Aufnahmeobjektive nicht durch die physische Breite der Aufnahmekameras bestimmt wird, sondern sich auch sehr schmal einstellen lässt.

Herkömmliche Spiegelrigs weisen auf ihrer Unterseite eine Montageplatte auf, mit der sich ein derartiges Spiegelrig auf einem handelsüblichen Schwenkkopf zur Durchführung von Schwenk- und Neigebewegungen montieren lässt. Fest mit der Montageplatte verbunden sind vertikal angeordnete Halterungselemente, welche die beiden Kameras und den Spiegelkasten tragen. Abgesehen von einer Feinjustage von einer oder beiden Kameras sind die Halterungen von Spiegelkasten und Kameras starr mit der Montageplatte verbunden.

Nachteilig hierbei ist, dass eine Einstellung eines Neigewinkels ausschließlich mittels eines Schwenkkopfes vorgenommen wird und so das gesamte Gewicht dieser starren Konstruktion um die horizontale Schwenkachse des Schwenkkopfes geneigt wird.

Da herkömmliche Schwenkköpfe meist so aufgebaut sind, dass die Neigeeinrichtung vertikal über einer Schwenkeinrichtung angeordnet ist, bewirkt eine Neigebewegung des Schwenkkopfes jeweils ein starkes Übergewicht nach vorne oder hinten, insbesondere da ein solches Spiegelrig samt Kameras und Objektiven leicht 50kg oder mehr ausmachen kann.

### Aufgabenstellung

Der vorliegenden Erfindung liegt die Aufgabe zugrunde, eine Halterungsvorrichtung zu schaffen, mit der ein Neigewinkel eines stereoskopischen Aufnahmerigs voreingestellt werden kann, so dass sich eine unvorteilhafte Lastverschiebung durch eine Neigungseinstellung an handelsüblichen Schwenkköpfen reduzieren lässt.

Diese Aufgabe wird gelöst durch eine Halterungsvorrichtung mit den Merkmalen des Anspruchs 1. Bevorzugte und vorteilhafte Ausgestaltungen der Erfindung sind Gegenstand der Ansprüche 2 bis 11.

Da bei der erfindungsgemäßen Halterungsvorrichtung die Schwenkachse die gedachte vertikale Ebene in einem Bereich schneidet, der von den horizontalen Projektionen der Befestigungseinrichtungen und dem Strahlenteiler auf die vertikale Ebene begrenzt wird, liegt die Schwenkachse in der Nähe des bzw. auf dem Gesamtschwerpunkts des drehbaren Halterungselements zusammen mit den montierten Kameras und dem Strahlenteiler, so dass eine Verschwenkung ohne Kraftaufwand möglich ist. Außerdem lässt sich eine Neigeeinstellung des gesamten Aufbaus aus Kameras und Spiegelkasten vorbestimmen und es ist auch möglich, im rechten Winkel von 90° zu einander angeordnete Kameras um die horizontale Schwenkachse senkrecht zu den optischen Achsen der beiden Aufnahmekameras um volle 180° zu verdrehen.

Die Schwenkachse liegt idealerweise auf dem Gesamtschwerpunkt. Da je nach Einsatz unterschiedlich lange Objektive an den Kameras verwendet werden, verlagert sich der Gesamtschwerpunkt jedoch dementsprechend. Die Schwenkachse wird daher bevorzugt so positioniert, dass sie in allen Einsatzfällen in einem Abstand von weniger als 10 cm, vorzugsweise weniger als 3 cm von dem Gesamtschwerpunkt liegt.

Hierdurch lassen sich unterschiedliche Neigewinkel vorbestimmen, ohne dass sich der Lastfall merklich verändert. Ebenso ist es möglich, den Strahlenteiler mit Spiegelkasten komplett nach oben zu rotieren und somit einen Austritt der optischen Achsen zu schaffen, welcher deutlich höher liegt, was für bestimmte Bildgestaltungen vorteilhaft sein kann, beispielsweise, wenn die Kamera knapp unter einem Motiv durchfahren soll.

Eine Aufnahmevorrichtung, die eine entsprechende Haltevorrichtung umfasst und bei der an den Befestigungseinrichtungen jeweils eine Kamera mit Objektiv angebracht ist, ist Gegenstand des Patentanspruchs 12.

Ein Ausführungsbeispiel der Erfindung wird im Folgenden anhand der Zeichnungen näher erläutert. Es zeigen:
**Fig. 1** eine Seitenansicht einer Ausgangsstellung einer stereoskopischen Aufnahmeeinheit mit zwei Aufnahmekameras, welche an einem L-förmigen Halterungselement befestigt sind, welches in seinem Scheitel mit einem Spiegelkasten verbunden ist und an beiden Seiten von einem bogenförmigen Halterungsbügel getragen wird, dessen konkaver Bereich nach vorne zeigt,
**Fig. 2** eine Rückansicht der stereoskopischen Aufnahmeeinheit von Fig. 1,
**Fig. 3** eine schematische Seitendarstellung der Aufnahmeeinheit von Fig. 1, wobei ein Halterungselement bezüglich der Ausgangsstellung um eine Schwenkachse etwas nach vorne verschwenkt ist,
**Fig. 4** eine schematische Seitendarstellung der Aufnahmeeinheit von Fig. 1, wobei das Halterungselement bezüglich der Ausgangsstellung um eine Schwenkachse etwas nach hinten verschwenkt ist,
**Fig. 5** eine schematische Seitendarstellung der Aufnahmeeinheit von Fig. 1, wobei das Halterungselement bezüglich der Ausgangsstellung um eine Schwenkachse um 180° nach hinten verschwenkt ist,
**Fig. 6** eine schematische Seitendarstellung der Aufnahmeeinheit von Fig. 1, wobei das Halterungselement bezüglich der Ausgangsstellung um eine Schwenkachse um 180° nach hinten verschwenkt ist, wobei der Halterungsbügel so angeordnet ist, dass der konkave Bereich nach hinten zeigt.

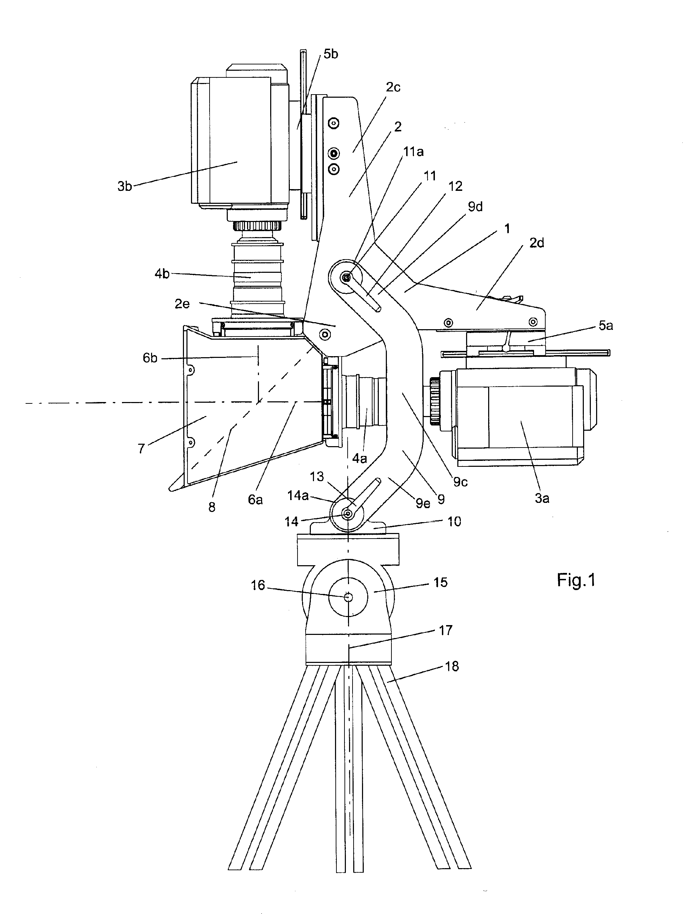

Die Fig. 1 bis 6 zeigen eine stereoskopische Aufnahmeeinheit 1 mit einem in Seitenansicht im Wesentlichen L-förmigen Halterungselement 2, welches von zwei im Abstand zueinander angeordneten L-förmigen Seitenplatten 2a, 2b gebildet wird und durch nicht näher gezeigte Aussteifungen und Verschraubungen eine stabile konstruktive Einheit bildet. Statt einer Plattenbauweise sind beispielsweise auch Konstruktionen aus Rohren oder einteilige Bauelemente aus Faserverbundstoffen denkbar.

An dem Halterungselement 2 sind zwei im Winkel von 90° zueinander ausgerichtete Aufnahmekameras 3a, 3b an jeweils einem Schenkel 2c, 2d des Halterungselements 2 an Kamerabefestigungen 5a, 5b befestigt, welche jeweils ein Objektiv 4a, 4b aufweisen.

Die Kameras 3a, 3b sind so ausgerichtet, das sich die Projektionen ihrer optischen Achsen 6a, 6b aus horizontaler Richtung auf der spiegelnden Oberfläche eines teildurchlässigen Strahlenteilerspiegels 8 schneiden, welcher in einem Winkel von 45° zu den optischen Achsen angeordnet ist und sich in einem Spiegelkasten 7 befindet. Mit anderen Worten schneiden sich die optischen Achsen 6a, 6b in der Darstellung von Fig. 1 auf der spiegelnden Oberfläche, obwohl die Achsen 6a, 6b senkrecht zur Blattebene von Fig. 1 zueinander versetzt sind.

Der Spiegelkasten 7 ist außen an dem Scheitel 2e des L-förmigen Halterungselements 2 fest angebracht.

Vorteilhaft wird eine solche Verbindung lösbar verschraubt oder geklemmt ausgeführt und durch - nicht näher gezeigte - Passstifte und/oder präzise Anschläge bestimmt, so dass eine genaue Ausrichtung des Spiegelkastens 7 und somit auch des Strahlenteilerspiegels 8 gewährleistet wird. Eine lösbare Verbindung ermöglicht die mechanische Trennung des Spiegelkastens 7 und der restlichen Einheit, um die einzelnen Komponenten beispielsweise platzsparend transportieren zu können.

Die Aufnahmekameras 3a, 3b sind jeweils mittels der Kamerabefestigungen 5a, 5b mit dem Halterungselement 2 verbunden. Üblicherweise sind derartige Kamerabefestigungen 5a, 5b mit Verschiebeplatten versehen, welche parallel zur optischen Achse 6a, 6b der jeweiligen Kamera 3a, 3b ausgerichtet sind. Mittels derartiger Verschiebeplatten lassen sich beispielsweise unterschiedlich lange Objektive verwenden, da die Kameras 3a, 3b in ihrer Distanz zum Spiegelkasten 7 verschoben und arretiert werden können.

Meist weisen derartige Kamerabefestigungen 5a, 5b auch eine Feinjustage auf, mit der die optische Achse senkrecht zu ihrer Ausrichtung verschoben werden kann. Weitere übliche Feinjustageeinstellungen sind eine Rotation um die optische Achse und eine Feineinstellung für die Neigung der optischen Achse. Hierbei kann eine solche Feineinstellung entweder für eine Kamera oder für beide Kameras vorgesehen sein. Derartige Feineinstellungen sind bei Spiegelrigs Stand der Technik und hier nicht weiter erläutert. Oft sind auch die Spiegel selbst um eine horizontale Achse, welche im Wesentlichen durch die Spiegelmitte verläuft, fein verschwenk- und justierbar und ersetzen teilweise andere Feinjustagemöglichkeiten. Ebenso sind auch Varianten bekannt, in denen der Spiegel in Richtung der optischen Achsen der Aufnahmekameras verfahr- und fixierbar ist.

Mittels der in oder an den Kamerabefestigungen 5a, 5b vorhandenen Feineinstellungen lassen sich die optischen Achsen beider Kameras deckungsgleich übereinander legen und mechanische Ungenauigkeiten in der Aufnahmeneinheit selbst, in den Kameras 3a, 3b und ihren Objektivhalterungen oder in den verwendeten Optiken 4a, 4b korrigieren.

Das L-förmige Halterungselement 2 ist im Bereich des Scheitels 2e, also in einem von dem Strahlenteilerspiegel 8 und den beiden Kamerabefestigungen 5a, 5b begrenzten Bereich auf beiden Seiten jeweils an einem oberen Ende eines bogenförmigen Halterungsbügels 9a, 9b angelenkt, so dass es um eine horizontal liegende Schwenkachse 11 an einer Lagerungsvorrichtung 11 a verschwenkt werden kann, wobei die Schwenkachse 11 parallel zur Ebene des Strahlenteilerspiegels 8 verläuft. Die Halterungsbügel 9a, 9b bilden somit jeweils ein Lagerelement einer Lagereinrichtung. Mittels eines Klemmhebels 12 lässt sich ein voreingestellter Schwenkwinkel zwischen bogenförmigen Halterungsbügeln 9 und dem L-förmigen Halterungselement 2 fixieren. Vorteilhaft wird eine derartige drehbare Lagerung mit ineinander greifenden Rastscheiben ausgeführt, da diese eine besonders sichere Klemmung und Arretierung gewährleisten.

Die bogenförmigen Halterungsbügel 9a, 9b weisen, ausgehend von einem geraden Mittelstück 9c, jeweils zwei in einem stumpfen Winkel abknickende Schenkel 9d, 9e auf. Der konkave Bereich der bogenförmigen Halterungsbügel 9a, 9b ist so ausgelegt, dass er in Aufnahmerichtung der stereoskopischen Aufnahmeeinheit 1, d.h. in Richtung des Spiegelkastens 7 zeigt. Die Halterungsbügel 9a, 9b sind spiegelsymmetrisch zu einer vertikalen Ebene ausgebildet, die in der Mitte zwischen den Seitenplatten 2a, 2b parallel zu diesen verläuft und senkrecht von der horizontalen Schwenkachse 11 geschnitten wird.

Eine solche Bauform ist von Vorteil, da die bogenförmige Ausgestaltung der bogenförmigen Halterungsbügel 9a, 9b bei einer Neigung des L-förmigen Halterungselements 2 nach unten den Spiegelkasten 7 teilweise umschließt.

Die horizontale Schwenkachse 11, um die das L-förmige Halterungselement 2 an der Lagerungsvorrichtung 11a gegenüber den bogenförmigen Halterungsbügeln 9a, 9b verschwenkt werden kann, läuft vorteilhaft möglichst nah durch den Schwerpunkt der Einheit aus L-förmigem Halterungselement 2, den Kameras 3a, 3b und dem Spiegelkasten 7. Da sowohl unterschiedliche Kameras 3a, 3b an der Einheit befestigt werden können, als auch unterschiedlich lange Objektive 4a, 4b Anwendung finden, ist eine solche Bestimmung des Schwerpunktes nur annäherungsweise möglich.

Am unteren Schenkel 9e sind die bogenförmigen Halterungsbügel 9a, 9b mit einer Montageplatte 10 so gelenkig verbunden, dass sie um eine horizontale und zur Schwenkachse 11 parallel verlaufende Schwenkachse 14 verschwenkt werden kann. Mittels eines Klemmhebels 13 lässt sich ein voreingestellter Winkel arretieren. Vorteilhaft ist auch hier, eine derartige Lagerung mit ineinandergreifenden Rastscheiben auszuführen, um eine sichere Arretierung zu gewährleisten und beispielsweise über Arretierungspins den Schwenkbereich einzuschränken, um zu verhindern, dass die Einheit zu stark nach vorne oder hinten geneigt wird.

Mittels dieser zweiten Verstellmöglichkeit zur Einstellung eines Neigewinkels kann der Einstellbereich vergrößert werden.

Die Montageplatte 10 ist auf einem handelsüblichen Schwenkkopf 15 montiert, welcher Neigebewegungen um eine horizontale Achse 16, welche senkrecht zu den optischen Achsen der Kameras 3a, 3b angeordnet ist, ausführen kann. Ebenso kann ein solcher Schwenkkopf 15 horizontale Schwenkbewegungen um eine vertikale Achse 17 durch sein Zentrum ausführen. Üblicherweise sind derartige handelsübliche Schwenkköpfe in beiden Achsen mit einer Dämpfungseinrichtung versehen, mittels der weiche Schwenk- und Neigebewegungen möglich sind.

Ein solcher handelsüblicher Schwenkkopf ist auf einem Stativ 18 montiert, kann aber ebenso auf einem Kamerawagen, einem Zapfen oder ähnlichem befestigt sein.

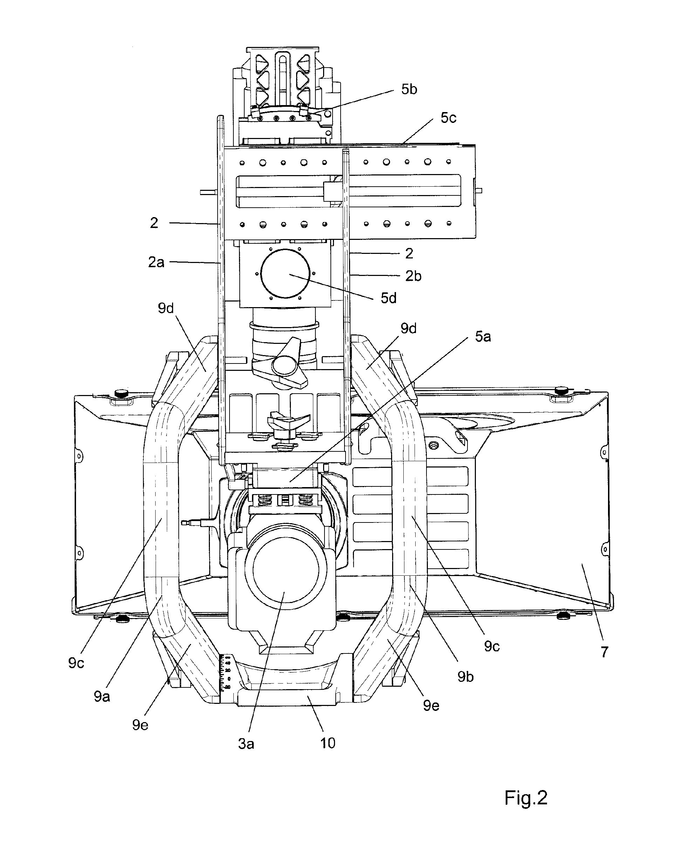

Fig. 2 zeigt eine Rückansicht der stereoskopischen Aufnahmeeinheit.

Üblicherweise sind bei Spiegelrigs eine oder beide Kameras in horizontaler Richtung, senkrecht zu den optischen Achsen beider Kameras verfahrbar. Die hier gezeigte Kamerahalterung 5b weist eine Verfahreinheit 5c zur Einstellung des interaxialen Abstandes auf.

Eine solche Verfahreinheit 5c besteht für gewöhnlich aus einer Linearführung und einem Wagen, welcher die eigentliche Kamerahalterung 5b trägt. Mittels einer Spindel oder eines Zahnriemens oder ähnlicher konstruktiver Elemente, kann eine Einstellung des interaxialen Abstandes entweder manuell oder motorisch vorgenommen werden.

Vorteilhaft ist im dargestellten Ausführungsbeispiel, dass die obere Kamera 3b zur Einstellung des interaxialen Abstandes genutzt wird, da hierdurch das L-förmige Halterungselement 2 sehr schmal bauend ausgeführt werden kann. Es sind aber auch Ausführungen üblich bei der nur die horizontale ausgerichtete Kamera oder beide Kameras gegeneinander verfahren werden.

Oft weisen stereoskopische Aufnahmeeinheiten auch an einer oder beiden Kameras eine senkrecht zur jeweiligen optischen Achse verlaufende Schwenkachse auf, mit der eine mechanische Konvergenz eingestellt werden kann.

Eine solche Schwenkachse ist im Ausführungsbeispiel durch das Drehlager 5d vorgesehen und ermöglicht eine Schwenkbewegung um bis zu 5 Grad mittels eines nicht näher gezeigten Motors.

Die bogenförmigen Halterungsbügel 9a und 9b sind beidseitig des L-förmigen Halterungselements 2 befestigt und weisen zusätzlich eine bogenförmige Ausgestaltung nach außen auf, wie es in Fig. 2 zu erkennen ist. Ausgehend von dem vertikal verlaufenden Mittelstück 9c laufen die kurzen Schenkel 9d, 9e in einem stumpfen Winkel jeweils zum L-förmigen Halterungselement 2 und zur Montageplatte 10 zusammen. Eine derartige bogenförmige Ausgestaltung ist vorteilhaft, da dies eine bessere Erreichbarkeit der Kamera 3a, 3b und der Optiken 4a, 4b gewährleistet.

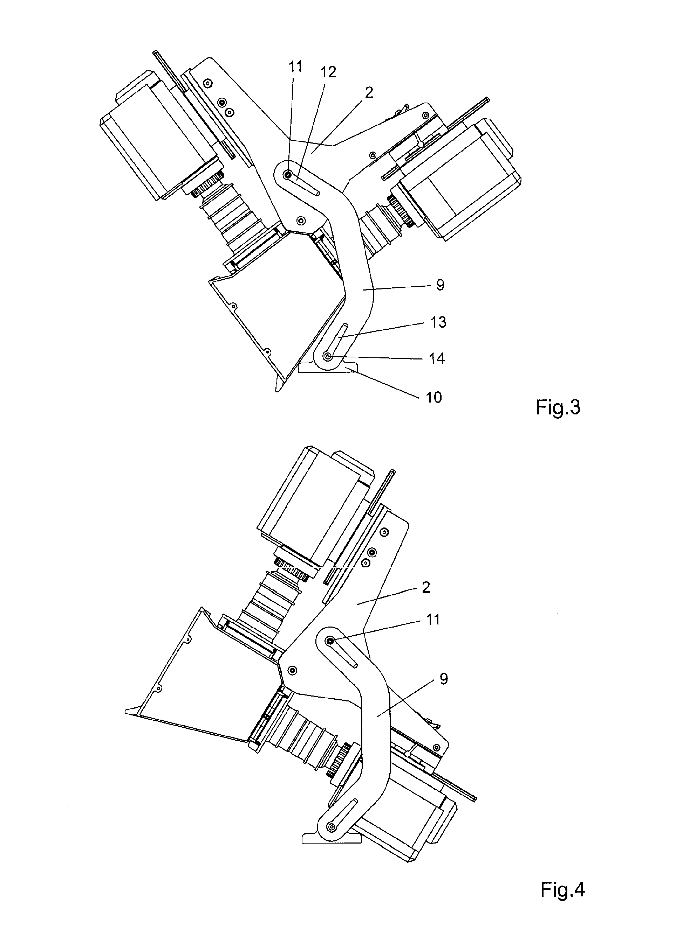

Fig. 3 zeigt eine nach unten geneigte Kamerakonfiguration, bei der das L-förmige Halterungselement 2 am oberen Ende der bogenförmigen Halterungsbügel 9a, 9b um die horizontale Achse 11 nach unten geschwenkt wurde und mittels eines Klemmhebels 12 arretiert wurde. Die bogenförmigen Halterungsbügel 9a, 9b nehmen hierbei die Form des Spiegelkastens 7 auf.

An ihrer unteren Seite sind die bogenförmigen Halterungsbügel 9 ebenfalls leicht um die horizontale Achse 14 gegenüber der Montageplatte 10 nach vorne geschwenkt und mittels des Klemmhebels 13 arretiert. Durch diese zusätzliche Neigung erhöht sich der Gesamtwinkel der Blickrichtung auf nahezu 45° ohne das System stark aus seinem Schwerpunkt zu bringen.

Fig. 4 zeigt eine um die horizontale Achse 11 nach oben geschwenkte und arretierte stereoskopische Aufnahmeeinheit mit in ihrem Mittelstück vertikal ausgerichteten bogenförmigen Halterungsbügeln 9a, 9b. Auch hier ist das Gesamtsystem weitgehend in seiner Balance.

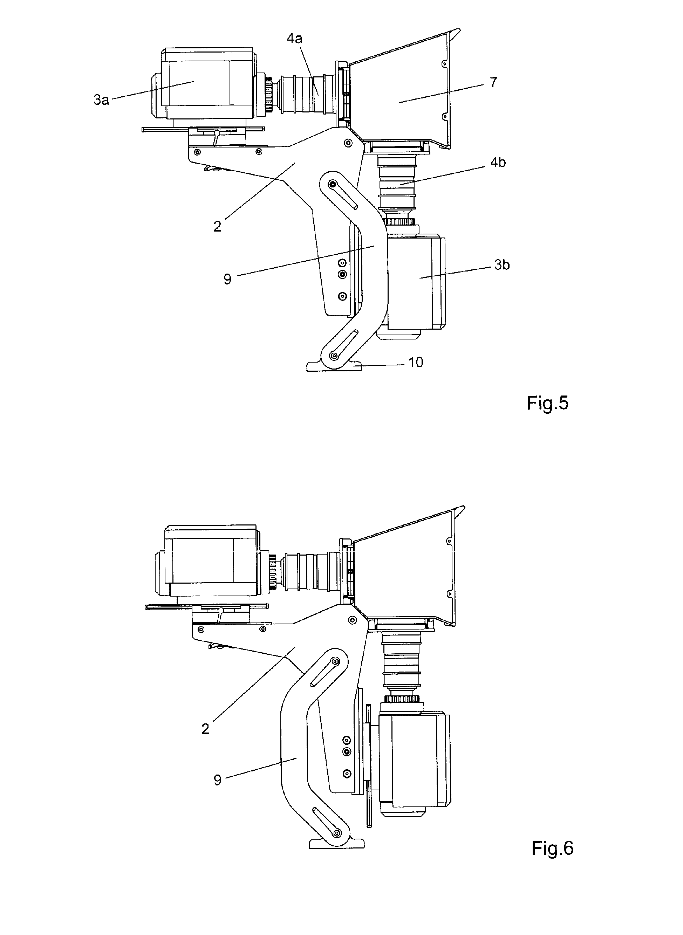

Fig. 5 zeigt ein um 180° durchgeschwenktes L-förmiges Halterungselement 2. Je nach Länge der Aufnahmekameras 3a, 3b und deren Objektive 4a, 4b kann es notwendig sein, eine der Kameras kurzzeitig abzunehmen, um eine solche Konfiguration zu erreichen. Auch hier ist das System weitgehend in seiner Balance.

Die in der Normalstellung horizontal ausgerichtete Kamera 3a blickt jetzt in die entgegengesetzte Richtung, die vormals vertikal nach unten gerichtete Kamera 3b schaut jetzt nach oben. Hierdurch liegt der Spiegelkasten 7 nun deutlich höher, als es in Fig. 1 der Fall war. In der Bildgestaltung kann sich dies positiv auswirken, beispielsweise wenn die Kamera dicht unter einem Objekt durchfahren soll, da der Austritt der optischen Achsen deutlich näher an der Oberkante des Gesamtsystems ist.

Eine weitere Anwendung einer solchen Konfiguration ist beispielsweise die Verwendung auf einem Kamerakran, bei dem die Montageplatte 10 nicht stehend auf einem Stativ befestigt wird, sondern hängend an einem Kran. In einer solchen Anwendung, würde das Gesamtsystem daher die gleiche Ausrichtung haben, wie in Fig. 1, allerdings in Form einer hängenden Konfiguration.

Fig. 6 zeigt die identische Ausrichtung, wie in Fig. 5, allerdings weisen die bogenförmigen Halterungsbügel 9a, 9b hier wiederum einer Ausrichtung in Blickrichtung des Gesamtsystems auf. Hierdurch wird eine bessere Erreichbarkeit der Kameras gewährleistet. In diesem Fall nimmt der konkave Bereich die - hier nicht sichtbare - Verfahreinheit 5c zur Einstellung des interaxialen Abstandes auf.

Vorteilhaft sind die bogenförmigen Halterungsbügel 9a, 9b spiegelsymmetrisch bezüglich einer Radialebene durch ihren Mittelpunkt ausgeführt. Hierdurch ist es möglich, diese abzuschrauben und um 180° um ihre Längsachse verdreht wieder einzubauen, wobei der konkave Bereich dann in die entgegengesetzte Richtung weist. Ein derartiger verdrehter Einbau ermöglicht eine Konfiguration, wie sie in Fig.6 gezeigt wird.

## Patentansprüche

1. Halterungsvorrichtung für ein stereoskopisches Aufnahmerig, welches zwei Kameras (3a, 3b) mit jeweils einem Objektiv (4a, 4B) umfasst, mit
- einem an einer Lagerungsvorrichtung (11a) um eine horizontale Schwenkachse (11) verschwenkbaren Halterungselement (2),
- einem im radialen Abstand zu der Schwenkachse (11) an dem Halterungselement (2) angebrachten Strahlenteiler (7, 8) mit einem teildurchlässigen Spiegel (8), dessen Spiegelebene parallel zur Schwenkachse (11) verläuft,
- zwei beidseitig des Strahlenteilers (7, 8) im Winkelabstand um die Schwenkachse an dem Halterungselement (2) angebrachten Befestigungseinrichtungen (5a, 5b), an denen jeweils eine Kamera (3a, 3b) so angebracht werden kann, dass sich die Projektionen der optischen Achsen (6a, 6b) der Objektive der Kameras (3a, 3b) aus einer horizontalen Richtung auf einer gedachten vertikalen Ebene schneiden, die von der Schwenkachse (11) senkrecht geschnitten wird, und die optischen Achsen (6a, 6b) auf die Spiegelebene treffen,
- wobei die Schwenkachse (11) die gedachte vertikale Ebene in einem Bereich schneidet, der von den horizontalen Projektionen der Befestigungseinrichtungen und dem Strahlenteiler (7,8) auf die vertikale Ebene begrenzt wird,
- wobei an der Lagerungsvorrichtung (11a) im Abstand zur horizontalen Schwenkachse (11) eine Montageeinrichtung (10) zur Befestigung an einem Schwenk- / Neigesystem vorgesehen ist.

2. Halterungsvorrichtung nach Anspruch 1, **dadurch gekennzeichnet, dass** die Schwenkachse (11) so angeordnet ist, dass sie durch den - in horizontaler Projektion auf die vertikale Ebene projizierten - Gesamtschwerpunkt anzubringender Kameras und des Strahlenteilers und des Halterungselements oder in der Nähe des Gesamtschwerpunkts verläuft.

3. Halterungsvorrichtung nach Anspruch 1 oder 2, **dadurch gekennzeichnet, dass** das Halterungselement (2) im wesentlichen L-förmig mit senkrecht zueinander angeordneten Schenkeln ausgebildet ist, wobei die Befestigungseinrichtungen (5a, 5b) bezüglich der Schwenkachse (11) radial außen an den Schenkeln (2c, 2d) angebracht sind und die Schwenkachse durch den Bereich des Scheitels (2e) verläuft, wobei der Strahlenteiler (7, 8) außen an dem Scheitel (2e) angeordnet ist.

4. Halterungsvorrichtung nach Anspruch 1, **dadurch gekennzeichnet, dass** das Halterungselement (2) an einer Lagereinrichtung (9a, 9b) um die Schwenkachse (11) verschwenkbar angelenkt ist.

5. Halterungsvorrichtung nach Anspruch 4, **dadurch gekennzeichnet, dass** die Lagereinrichtung (9a, 9b) im Abstand zur Schwenkachse (11) an einer Montageeinrichtung (10) verschwenkbar gelagert ist.

6. Halterungsvorrichtung nach Anspruch 4 oder 5, **dadurch gekennzeichnet, dass** die Lagereinrichtung zwei beidseitig außerhalb des Halterungselements (2) angeordnete Lagerelemente (9a, 9b) umfasst.

7. Halterungsvorrichtung nach Anspruch 6, **dadurch gekennzeichnet, dass** die Lagerelemente (9a, 9b) bogenförmig ausgebildet sind.

8. Halterungsvorrichtung nach Anspruch 1, **dadurch gekennzeichnet, dass** die Lagerelemente (9a, 9b) nach außen gekrümmt sind.

9. Halterungsvorrichtung nach einem der Ansprüche 3 bis 8, **dadurch gekennzeichnet, dass** das L-förmige Halterungselement (2) zwei in Richtung der Schwenkachse (11) im Abstand angeordnete Halterungsplatten (2a, 2b) umfasst.

10. Halterungsvorrichtung nach Anspruch.6 bis9, **dadurch gekennzeichnet, dass** die Lagerelemente (9a, 9b) bezüglich der vertikalen Ebene spiegelsymmetrisch ausgebildet.

11. Halterungsvorrichtung nach Anspruch.6 bis 10, **dadurch gekennzeichnet, dass** die Lagerelemente (9a, 9b) lösbar befestigt sind.

12. Aufnahmevorrichtung , die eine Haltevorrichtung nach einem der vorhergehenden Ansprüche umfasst, wobei an den Befestigungseinrichtungen jeweils eine Kamera mit Objektiv angebracht ist.
